# EUROPEAN PATENT SPECIFICATION

(11) **EP 2 181 293 B1**
(45) Date of publication and mention of the grant of the patent: **28.09.2016**
(21) Application number: 07860674.6
(22) Date of filing: 26.12.2007
(51) Int. Cl.: F24F 1/00, F24F 13/28, B01D 46/04

(54) **AIR CONDITIONER**
KLIMAANLAGE
APPAREIL DE CLIMATISATION

(30) Priority: 31.08.2007 KR 20070088504
(43) Date of publication of application: 05.05.2010
(73) Proprietor: LG Electronics Inc., Seoul 150-721 (KR)
(72) Inventor: YANG, Seung-Hoon, Gyeongnam-do 641-711 (KR)
(74) Representative: Boult Wade Tennant
(86) International application number: PCT/KR2007/006855
(87) International publication number: WO 2009/028767

(56) References cited:
- EP-A1- 1 734 312
- JP-A- 6 114 224
- JP-A- 2001 099 479
- JP-A- 2005 083 721
- JP-A- 2006 284 044
- JP-A- 2006 284 044
- JP-U- 62 145 019
- KR-A- 20030 030 083

## Description

### Technical Field

The present disclosure relates to an air conditioner.

### Background Art

In general, an air conditioner is an apparatus for cooling/heating an indoor space using a compressor, a condenser, an expander, and an evaporator. In the case where a purifying unit for purifying air is installed, the air conditioner also purifies the indoor space.

Various kinds of purifying units are installed in the air conditioner, and particularly, a filter filtering off foreign substances contained in air is detachably installed. Therefore, while the air conditioner operates, the foreign substances contained in the air are filtered by the filter, so that the indoor space is purified. Also, the filter is separated from the air conditioner and cleaned, or replaced.

Since air intake ability is reduced when the filter is full of much foreign substances, it needs to be cleaned or replaced periodically. However, cleaning or replacing the filter causes inconvenience to a user.

EP1734312A1 discloses an air conditioner according to the preamble of claim 1. JP2001099479A discloses an air conditioner having a filter device equipped with a cleanable filter.

### Disclosure of Invention

### Technical Problem

Embodiments provide an air conditioner that can automatically clean a filter.

Embodiments also provide an air conditioner that allows a dust collector to be easily detached/attached, and allows a cleaning operation to be easily performed.

Embodiments also provide an air conditioner that allows a user to easily check an amount of dust inside a dust collector and thus prevents the dust collector from being detached/attached unnecessarily.

### Technical Solution

An air conditioner according to the present invention is defined in claim 1.

Preferred embodiments are defined in the dependent claims.

In one embodiment, an air conditioner includes: a main body in which an air suction port is formed; a filter purifying air introduced to the main body; a suction device suctioning foreign substances of the filter; a dust collector to which foreign substances and air suctioned to the suction device flow; a dust collector mounting unit provided in the main body to selectively mount the dust collector; and a cover unit connected to the main body to open/close the dust collector mounting unit.

In another embodiment, an air conditioner includes: a main body including an electronic part where a control box is installed; a filter filtering air suctioned to the main body; a suction device suctioning foreign substances of the filter, a cleaning blower in the electronic part to generate suctioning force; a dust collector communicated with the cleaning blower, the dust collector being disposed on one side of the cleaning blower; and a dust collector mounting unit provided in the main body, in which the dust collector is mounted.

The details of one or more embodiments are set forth in the accompanying drawings and the description below. Other features will be apparent from the description and drawings, and from the claims.

### Advantageous Effects

According to an embodiment, foreign substances of the filter are automatically cleaned.

Also, the dust collector is attached/detached to/ from the dust collector mounting unit in the main body, and the cover unit opens/closes the dust collector mounting unit. Accordingly, when the cover unit is closed, the dust collector is not seen from the outside, so that an appearance improves. When the cover unit is open, the dust collector can be easily separated to the outside, so that attaching/detaching and cleaning the dust collector are easy.

Also, since an amount of foreign substances stored in the dust collector can be easily checked with the cover unit opened, unnecessary attachment/detachment of the dust collector can be prevented.

Also, since the cover unit shields an opening formed in the main body and the dust collecting mounting unit simultaneously, a front appearance of the air conditioner is elegant and the structure of the air conditioner is simple.

Also, since the cleaning blower generating suctioning force is installed in the electronic part, and the dust collector is located in the front of the cleaning blower when the dust collector is mounted, installation positions of the cleaning blower and the dust collector are optimized and the air conditioner can be manufactured in a compact size.

### Brief Description of the Drawings

FIG. 1 is a perspective view of an air conditioner according to an embodiment.
FIG. 2 is a perspective view of an air conditioner with a cover unit opened.
FIG. 3 is a perspective view with a dust collecting unit separated.
FIG. 4 is a cross-sectional view illustrating the inner construction of an air conditioner.
FIG. 5 is a perspective view of an air conditioner with an suction unit separated.
FIG. 6 is a front view of an air conditioner with an suction unit separated.
FIG. 7 is an exploded perspective view of an air conditioner.
FIG. 8 is a schematic view of an air conditioner where a dust collector is installed.
FIG. 9 is a partial cross-sectional view of an air conditioner where a dust collector is installed.
FIG. 10 is a side schematic view of an air conditioner from which a dust collector is separated.
FIG. 11 is a perspective view of an air conditioner where a dust collector is drawn according to another embodiment.
FIG. 12 is a cross-sectional view of an air conditioner in which a dust collector is installed according to the another embodiment.

### Mode for the Invention

Reference will now be made in detail to the embodiments of the present disclosure, examples of which are illustrated in the accompanying drawings.

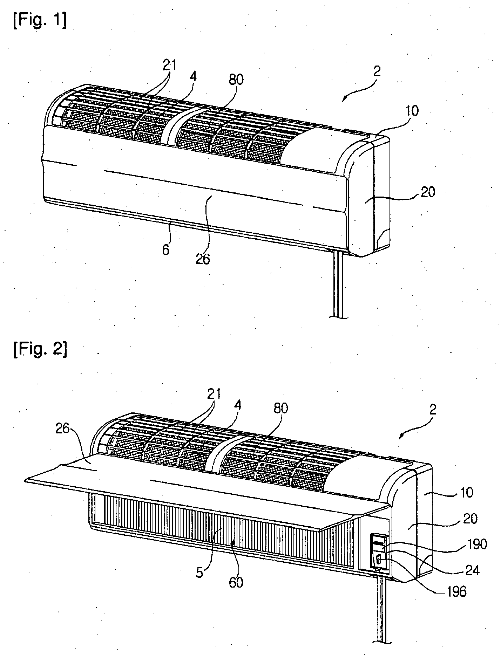

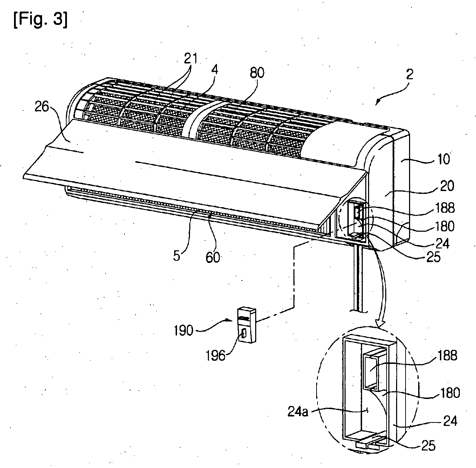

FIG. 1 is a perspective view of an air conditioner according to an embodiment, FIG. 2 is a perspective view of an air conditioner with a cover unit opened, and FIG. 3 is a perspective view with a dust collecting unit separated.

Referring to FIGS. 1 and 3, the air conditioner includes a main body 2 forming an appearance. Air suction port 4 and air discharge port 6 are formed in the main body 2. A filter 80 purifying air and a cleaning device cleaning foreign substances filtered by the filter 80 are installed inside the main body 2.

Though a wall-mount type air conditioner is illustrated in FIG. 1, the present disclosure is not limited thereto but can be applied to a stand type air conditioner and a ceiling type air conditioner.

The air suction port 4 can be formed in at least one of the front side and the top side of the main body 2, or formed in a surface ranging from the front upper side to the top side.

Description is made using an example in which the edges of the main body 2 between the front side and the top side are inclined or rounded, and the air suction port 4 are formed in a surface ranging from the inclined portion or rounded portion to the top side.

The air discharge port 6 can be formed in at least one of the front side and the bottom side of the main body 2, or in the lower portion of the front side of the main body 2, or in a surface ranging from the lower portion of the front side to the bottom side of the main body 2.

Description is made using an example in which the edge of the main body 2 between the front side and the bottom side are inclined or rounded, and the air discharge port 6 are formed in the inclined portion or rounded portion.

In detail, the main body 2 includes a case 10 and a suction unit 20 coupled to the front of the case to allow air to be suctioned.

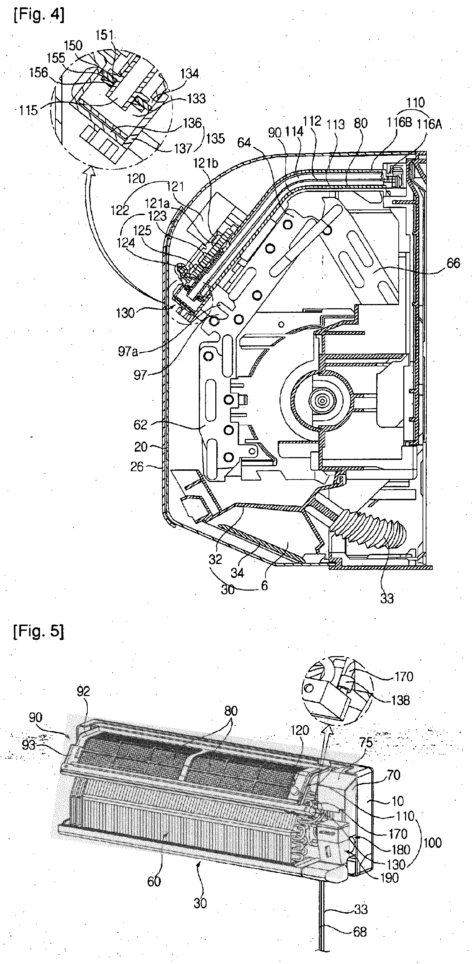

In detail, the case 10 can be directly mounted on a wall using a coupling member, or a separate installation plate 11 of FIG. 5 is coupled to the wall using a coupling member and then the case 10 can be hooked at the installation plate 11 via a hook or coupled to the installation plate 11 using a coupling member.

The suction unit 20 includes the air suction port 4 and a suctioning grill 21. The filter 80 purifying air is provided inside the suction unit 20.

A dust collector mounting unit 24 in which a dust collector 190 storing foreign substances of the filter 80 is mounted is formed in the suction unit 20. Also, the dust collector 190 passes through the dust collecting mounting unit 24. A receiving portion 24a receiving the dust collector 190 is formed in the dust collector mounting unit 24.

Also, a guide 25 supporting the dust collector 190 is formed on the dust collecting mounting unit 24. A portion of the guide 25 protrudes from the front end of the dust collector mounting unit 24 to the front to guide the dust collector 190.

The left and right ends of the guide 25 are separated from the bottom surface of the dust collector mounting unit 24 to elastically move when the dust collector 190 is detached/attached.

An opening 5 is formed in the suction unit 20. The opening 5 serves as an air intake passage. A heat exchanger 60 is disposed in the rear of the opening 5. The heat exchanger 60 is formed on one separated side of the dust collector mounting unit 24. Also, a cover unit 26 shielding the opening 5 and the dust collector mounting unit 24 is rotatably coupled to the suction unit 20.

That is, the horizontal length of the cover unit 26 is formed larger than that of the opening 5 to shield the opening 5 and the dust collector mounting unit 24. Therefore, the dust collector mounting unit 24 is not exposed to the outside while the cover unit 26 is closed.

A discharge portion 188 of a cleaning blower 180 passes through the dust collector mounting unit 24 in the rear and is located in the receiving portion 24a. Therefore, when the dust collector 190 is mounted in the dust collector mounting unit 24, the discharge portion 188 is coupled to the dust collector 190.

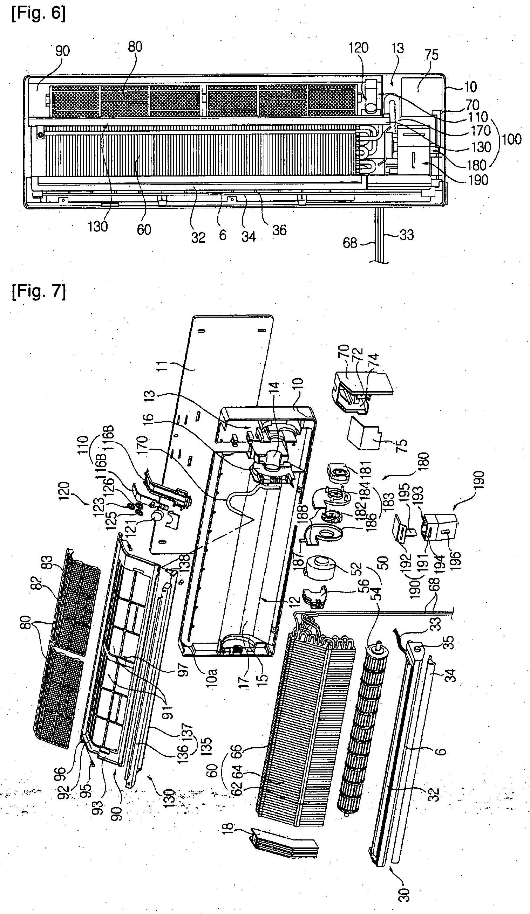

FIG. 4 is a cross-sectional view illustrating the inner construction of an air conditioner, FIG. 5 is a perspective view of an air conditioner with an suction unit separated, FIG. 6 is a front view of an air conditioner with an suction unit separated, and FIG. 7 is an exploded perspective view of an air conditioner.

Referring to FIGS. 4 to 7, passage guides 15, 16, and 17 guiding airflow are integrally formed on the case 10.

The passage guides 15, 16, and 17 include the left guide 15 and the right guide 16 protruding to the front from the case 10, and a central guide 17 provided between the left guide 15 and the right guide 16. A heat exchanger support 18 supporting the heat exchanger 60 and simultaneously forming an air passage is installed in the case 10.

In an embodiment, the right guide 16 serves as a support supporting the heat exchanger 60 and forms an air passage. The heat exchanger support 18 is coupled to the left guide 15.

A discharge unit 30 discharging air that has exchanged heat in the inside of the main body 2 is provided under the suction unit 20. The discharge unit 30 is coupled to at least one of the case 10 and the suction unit 20 using a coupling member.

A drain part 32 receiving condensed water falling down from the heat exchanger 60 is formed in the upper portion of the discharge unit 30. A drain hose 33 guiding the condensed water to the outside of the main body 2 is connected to the drain part 32. The air discharge hole 6 is located below the drain part 32. A vane 34 controlling vertical wind direction of air passing through the air discharge hole 6 and opening/ closing the air discharge hole 6 is rotatably disposed in the discharge unit 30. The vane 34 is rotated by a vane motor 35. Also, a louver 36 controlling a horizontal wind direction of air passing through the air discharge hole 6 is rotatably disposed in the discharge unit 30.

Meanwhile, a blower 50 allowing air to be suctioned, and the heat exchanger 60 allowing air suctioned into the main body 2 to exchange heat with refrigerant are installed inside the main body 2.

In detail, referring to FIG. 7, the blower 50 includes a fan motor 52 installed in a motor installation portion 14 formed on the case 10, a fan 54 coupled to a rotational shaft of the fan motor 52, and a motor cover 56 covering the fan motor 52. The fan 54 can be a cross-flow fan, for example.

The heat exchanger 60 includes a vertical portion 62 located on the drain part 32, a front inclined portion 64 inclined from the upper side of the vertical portion 62 toward the upper side of the case 10, and a rear inclined portion 66 inclined from the upper side of the front inclined portion 64 toward the bottom side of the case 10. A refrigerant pipe 68 connected to an outdoor unit (not shown) is connected to the heat exchanger 60.

Meanwhile, a control box 70 is provided inside the main body 2, particularly, near the fan motor 52. The control box 70 is mounted in an electronic part 13 of the case 10.

A main printed circuit board (PCB) controlling an operation of the fan motor 52, etc. and a cleaning PCB 74 controlling an operation of the cleaning device are installed in the control box 70.

The cleaning PCB 74 is connected to the main PCB 72 through a lead line to control an operation of the cleaning device in response to a control signal of the main PCB 72.

The front side of the control box 70 is open, and a receiving portion receiving the main PCB 72 and the cleaning PCB 74 is formed inside the control box 70. A box cover 75 is coupled on the front side of the control box 70.

Meanwhile, the filter 80 filters foreign substances contained in air suctioned to the air suction port 4. One or a plurality of filters 80 can be provided.

The filter 80 includes a horizontal portion 82 and an inclined portion 83 inclined downward from the horizontal portion 82. Also, a filter frame 90 on which the filter 82 is mounted is installed on the main body 2.

The filter 80 can be attached/detached to/from the filter frame 90, fixed on the filter frame 90, or integrally formed with the filter frame 90. Description is made using an example in which the filter 80 is detachable from the filter frame 90.

The filter frame 90 is located in the front of the heat exchanger 60. Openings 91 are formed in the filter frame 90 to allow air to pass through the openings 91.

The filter frame 90 includes a horizontal portion 92 and an inclined portion 93 inclined downward from the front end of the horizontal portion 92.

The rear end of the horizontal portion 92 of the filter frame 90 is coupled to the case 10. Coupling portions 96 in each of which a coupling hole is formed protrude from both sides of the filter frame 90. A coupling member 95 passes through the coupling hole. A coupling boss 10a to which the coupling member 95 is coupled is formed at a position of the upper portion of the case 10 corresponding to the coupling hole.

Also, referring to FIG. 2, a heat exchanger fixing portion 97 fixed to the heat exchanger 60 is formed. A cut portion 97a is formed in the heat exchanger fixing portion 97.

Meanwhile, the cleaning device includes a suction device 100 and a dust collector 190 separating foreign substances from air containing the foreign substances moved by the suction device 100.

The suction device 100 suctions dust of the filter 90 together with the air and moves the suctioned dust to the dust collector 190. The suction device 100 includes a suction nozzle 110, a moving part 120, a suction duct assembly 130, a hose 170, and a cleaning blower 180.

In detail, the suction nozzle 110 suctions foreign substances of the filter 80 while moving along the filter 80. The suction nozzle 110 is formed long approximately in a vertical direction and slides horizontally along the filter 80.

The suction nozzle 110 is bent in a shape corresponding to the filter 80 and the filter frame 90.

A suction portion 112 is formed in a surface of the suction nozzle 110 facing the filter 80. A brush 113 is installed to the suction nozzle 110. The brush 113 cleans foreign substances of the filter 80 when the suction nozzle 110 moves.

A passage 114 through which foreign substances and air pass is formed inside the suction nozzle 110. A discharge portion 115 through which foreign substance and air are discharged is formed under the suction nozzle 110. The discharge portion 115 is formed in a quadrangular duct shape.

The suction nozzle 110 includes a lower body 116A in which the suction portion 112 is formed, and an upper body 116B coupled to the lower body 116A and forming a passage between the lower body 116A and the upper body 116B. The brush 113 is installed to the lower body 116A. The suction portion 112 and the discharge portion 115 are formed in the lower body 116A.

The moving part 120 includes a driving motor 121 moving the suction nozzle 110, a driving gear 123 rotated by the driving motor 121, a fixed gear 124 formed on the suction duct assembly 130, driven gears 125 and 126 engaged with the driving gear 123 and the fixed gear 124 to move along the fixed gear 124 while the driving gear 123 rotates.

The suction nozzle 110 further includes a gear box 127 covering the driving gear 123 and the driven gears 125 and 126.

In detail, the driving motor 121 can rotate in a forward/reverse direction so that the suction nozzle 110 can move in a left/right direction. That is, the driving motor 121 can rotate in both directions.

The driving motor 121 is connected to the driving gear 123 to directly rotate the driving gear 123, or a motor gear 121 a engaged with the driving gear 123 is installed on a rotational shaft 121b to indirectly rotate the driving gear. In the embodiment, description is made using an example in which the motor gear 121a is coupled to the rotational shaft 121b of the driving motor 121.

A plurality of driven gears 125 and 126 are separated from one another. Therefore, the suction nozzle 110 can stably move in a horizontal direction.

The driven gears 125 and 126 move along the fixed gear 124 while they rotate together upon rotation of the driving gear 123. As the driven gears 125 and 126 move along the fixed gear 124, the suction nozzle 110 moves horizontally together.

The suction duct assembly 130 includes a suction duct 135 in which a space communicating with the suction nozzle 110 is formed and an open surface 134 through which the suction nozzle 110 moves is formed, and a screening member 150 connected with the suction nozzle 110 and shielding the open surface 134 while it is moved by the suction nozzle 110.

The lower end of the discharge portion 115 of the suction nozzle 110 passes through the open surface 134 of the suction duct 135 and is located inside the suction duct 135. That is, the suction nozzle 110 moves along the lengthwise direction of the open surface 134 with the discharge portion 115 inserted into the suction duct 135.

A connection portion 138 to which the hose 170 is connected is coupled to the suction duct 135. The connection portion 138 is provided on one side of the suction duct 135.

The suction duct 135 includes a duct case 136 having two adjacent open surfaces, and a duct cap 137 blocking one surface of the duct case 136 and forming the open surface 134 between the duct case 136 and the duct cap 137.

The screening member 150 forms a suction force application space, i.e., a suction passage 133 inside the suction duct 135 together with the suction duct 135. The screening member 150 is formed in a band shape of a closed loop.

A passing portion 151 through which the discharge portion 115 of the suction nozzle 110 passes is formed in the screening member 150. Therefore, the discharge portion 115 passes through the passing portion 151 and is located in the suction passage 133.

The screening member 150 can be directly fixed on the suction nozzle 110 using an adhesive means such as an adhesive, or can be fixed on the suction nozzle 110 using a separate fixing member 155. Description is made for the case where the screening member 150 is fixed on the suction nozzle 110 using the fixing member 155.

An opening 156 through which the discharge portion 115 of the suction nozzle 110 passes is formed in the fixing member 155.

The hose 170 has one end connected to the suction duct assembly 130 and the other end connected to the cleaning blower 180.

The cleaning blower 180 is installed in the electronic part 13. The cleaning blower 180 includes a cleaning fan motor 181 coupled to the case 10, a cleaning fan 182 rotated by the cleaning fan motor 181, and a cleaning fan housing 183 coupled to the cleaning fan motor 181 and surrounding the cleaning fan 182. The cleaning fan 182 can be a turbo fan, for example. The discharge portion 188 discharging foreign substances and air suctioned into the inside is formed in the cleaning fan housing 183. The discharge portion 188 is coupled to the dust collector 190 as described above.

The cleaning fan housing 183 includes a first body 184 through which the rotational shaft of the cleaning fan motor 181 passes, and a second body 186 forming an blowing passage between the first body 184 and the second body 186.

An orifice guiding airflow to the cleaning fan 182 is formed at the second body 186. A connection portion 187 to which the hose 170 is coupled protrudes from the second body 185.

The dust collector 190 communicates with the cleaning blower 180. The dust collector 190 includes a dust collecting body 191 having an one open side, and a dust collecting cover 192 coupled to the dust collecting body 191 to block the one open side of the dust collecting body 191.

An air intake hole 193 suctioning air containing foreign substances, and an air discharge hole 194 discharging air from the dust collecting body 191 are formed in the dust collecting body 191.

The air intake hole 193 and the air discharge hole 194 are respectively formed in the planes of the dust collecting body 191 perpendicular to each other so that the air containing foreign substances suctioned into the air intake hole 193 does not directly moves to the air discharge hole 194 but is separated to pure air and foreign substances while it collides with at least one plane inside the dust collector 190.

That is, the air intake hole 193 is formed in the first plane of the dust collecting body 191, and the air discharge hole 194 is formed in the second plane of the dust collecting body 191.

A partition wall 195 allowing a U-shaped passage to be formed inside the dust collector 190 is provided to the dust collector 190. The partition wall 195 protrudes downward from the bottom side of the dust collecting cover 192 and faces the plane in which the air discharge hole 194 is formed.

Therefore, the air containing foreign substances suctioned through the air intake hole 193 flows around the lower end of the partition wall 195. The foreign substances relatively heavier than the air fall down and only pure air is discharged to the outside of the dust collector 190 through the air discharge hole 194 while the air containing the foreign substances flows around.

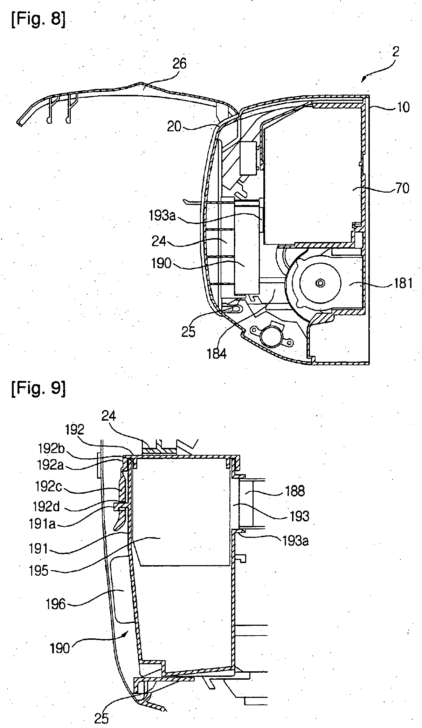

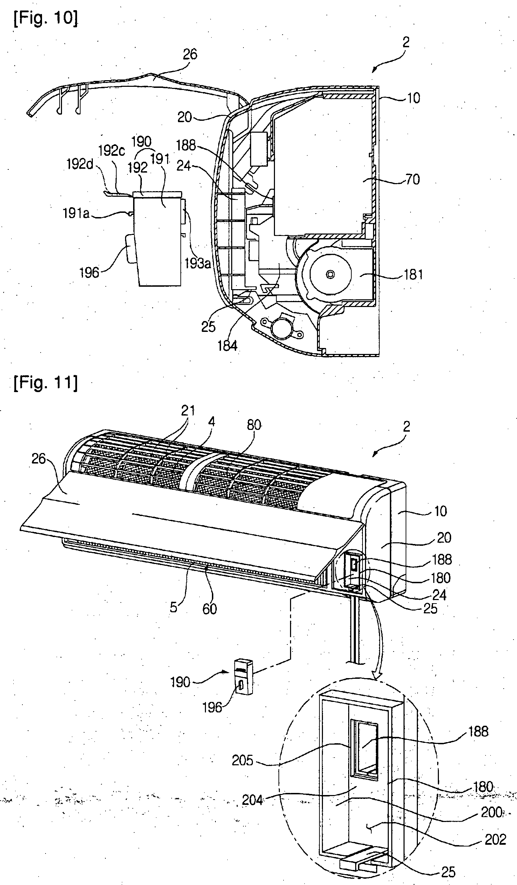

FIG. 8 is a schematic view of an air conditioner where a dust collector is installed, FIG. 9 is a partial cross-sectional view of an air conditioner where a dust collector is installed, and FIG. 10 is a side schematic view of an air conditioner from which a dust collector is separated.

Referring to FIGS. 8 to 10, the dust collecting cover 192 includes an edge 192a surrounding the upper end of the dust collecting body 191, and an insertion rib 192b formed on the inner separated surface of the edge 192. Therefore, the upper end of the dust collecting body 191 is inserted and coupled between the edge 192a and the insertion rib 192b.

A protrusion 191a coupled to the dust collecting cover 192 is formed on the front side of the dust collecting body 191. A coupling portion 192c coupled to the protrusion 191a is formed on the edge 192a of the dust collecting cover 192. The coupling portion 192c is so formed as to elastically move with respect to the edge 192a.

An insertion hole 192d into which the protrusion 191a is inserted is formed in the coupling portion 192c.

A coupling portion 193a to which the discharge portion 188 is coupled is formed on the rear side of the dust collecting body 191. The coupling portion 193a is formed in a quadrangular duct shape.

The dust collector 190 is formed of a transparent material so that a user can check an amount of foreign substances stored inside the dust collector 190 when the cover unit 26 is opened. At this point, the dust collector is entirely formed of the transparent material, or only the front portion of the dust collector, which is a portion exposed when the cover unit 26 is opened, can be formed of the transparent material. A handle 196 protrudes to the front from the front portion of the dust collector 191.

The operation of the air conditioner having the above construction will be described below.

The main PCB 72 outputs a filter cleaning signal to the cleaning PCB 74 periodically when a filter cleaning command is input through a control panel installed to the air conditioner or a remote controller remotely controlling the air conditioner, or when an operation condition of the air conditioner is a filter cleaning condition.

The cleaning PCB 74 drives the driving motor 121 and simultaneously outputs a control signal driving the cleaning fan motor 181. Then, the driving motor 121 and the cleaning fan motor 181 are driven.

When the driving motor 121 is driven, the motor gear 121a, and the driving gear 123 engaged with the motor gear 121a are rotated. The driven gears 125 and 126 move along the fixed gear 124 while they are rotated by the driving gear 123.

Then, the suction nozzle 110 moves horizontally along the filter 80. While the suction nozzle 110 slides along the filter 80, foreign substances of the filter 80 are separated from the filter 80 by the brush 113.

Meanwhile, suction force is generated by rotation of the cleaning fan motor 181 and the cleaning fan 182 simultaneously with the movement of the suction nozzle 110 and the separation of foreign substances.

When suction force is applied, the foreign substances separated from the filter 80 are suctioned into the suction nozzle 110, and then move to the suction duct 135 through the discharge portion 115. Air and foreign substances that have moved to the suction duct 135 sequentially pass through the connection portion 138 and the hose 170, and then are suctioned into the cleaning fan housings 184 and 186. After that, the foreign substances and air suctioned into the cleaning fan housings 184 and 186 are discharged to the dust collector 190.

The foreign substances and air that have moved to the dust collector 190 flow around due to the partition wall 195 and pass through the U-shaped passage 198. The foreign substances and air are separated from each other while they pass through the U-shaped passage 198. The separated foreign substances are stored in the lower portion of the dust collector 190, and the separated air is discharged to the outside of the dust collector 190 through the air discharge hole 194.

Meanwhile, when cleaning the filter continues, foreign substances are gradually piled inside the dust collector 190. When a user opens the cover unit 26, the front side of the dust collector 190 is exposed to allow the user to check an amount of foreign substances stored in the dust collector 190 through the front side of the dust collector 190. After that, the dust collector 190 is pulled to the front with the handle 196 taken to separate the dust collector 190 from the main body 2.

Then, the dust collector 190 is separated from the cleaning blower 180, and guided by the guide 25 and drawn to the outside of the dust collector mounting unit 24.

After the dust collecting cover 192 is separated from the dust collecting body 191, foreign substances stored in the dust collecting body 191 are discharged to the outside.

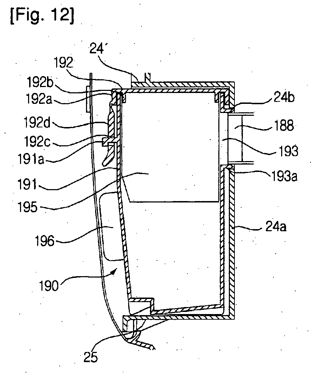

FIG. 11 is a perspective view of an air conditioner where a dust collector is drawn according to another embodiment, and FIG. 12 is a cross-sectional view of an air conditioner in which a dust collector is installed according to the another embodiment.

The present embodiment is almost the same as the previous embodiment but only different from the previous embodiment in the structure of a dust collector mounting unit. Therefore, only characteristics parts of the present embodiment are described below.

Referring to FIGS. 11 and 12, the dust collector mounting unit 200 according to the present embodiment is formed in a box shape having an open front side. A receiving portion 202 receiving a dust collector 190 is formed in the dust collector mounting unit 200. The rear side of the dust collector 190 is closely attached on the rear side 204 of the dust collector mounting unit 200.

With the dust collector 190 mounted in the dust collector mounting unit 200, a portion of the dust collector 190 is exposed to the outside of the dust collector mounting unit 200. That is, the back and forth length of the dust collector mounting unit 200 is smaller than that of the dust collector 190.

An opening portion 205 is formed in the rear side 204 of the dust collector mounting unit 200. At least one of a coupling portion 193a of the dust collector 190, and a discharge portion 188 of a cleaning blower passes through the opening portion 205.

Here, though the foreign substances of the dust collector are separated from the air by the partition wall according to the above embodiments, a cyclone unit allowing foreign substances to be separated from air through a cyclone method can be provided inside the dust collector.

For an alternative, a cyclone unit can be coupled on the outer side of the dust collector. In this case, the cyclone unit is coupled to a cleaning blower and the dust collector, and the dust collector can be selectively mounted in a dust collector mounting unit.

Various variations and modifications are possible in the component parts and/or arrangements of the subject combination arrangement within the scope of the appended claims. In addition to variations and modifications in the component parts and/or arrangements, alternative uses will also be apparent to those skilled in the art.

## Claims

1. An air conditioner comprising:
a main body (2) in which an air suction port (4) is formed;
a filter (80) purifying air suctioned to the main body (2);
a suction device (100) suctioning foreign substances of the filter (80) including a cleaning blower (180) provided with a cleaning fan motor (181) configured to generate a suction force and a discharge portion (188);
a dust collector (190) to which foreign substances and air suctioned to the suction device (100) flow, **characterized in that** the dust collector includes:
a dust collecting body (191) having an one open side;
a dust collecting cover (192) coupled to the dust collecting body (191) to block the open side of the dust collecting body (191);
an air intake hole (193) formed in the dust collecting body (191) configured to suction air containing foreign substances; and
an air discharge hole (194) formed in the dust collecting body (191) configured to discharge air from the dust collector (190);
a dust collector mounting unit (24) provided in the main body (2) to selectively mount the dust collector (190), the dust collector mounting unit (24) defining a receiving portion configured to receive the dust collector (190); and
a cover unit (26) connected to the main body (2) to open and close the dust collector mounting unit (24); and **in that**
the discharge portion (188) of the suction device is coupled to the dust collector (190) to discharge the foreign substances.

2. The air conditioner according to claim 1, wherein a rear side of the dust collector (190) is closely attached on a rear side of the dust collector mounting unit (24).

3. The air conditioner according to claim 1, wherein a front side of the dust collector (190) exposed to an outside when the cover unit (26) is opened is formed of a transparent material.

4. The air conditioner according to claim 1, wherein a guide (25) guiding a mounting operation of the dust collector (190) is formed on the dust collector mounting unit (24).

5. The air conditioner according to claim 1, wherein a guide (25) supporting the dust collector (190) is provided on a bottom side of the dust collector mounting unit (24), the guide (25) being elastically transformable.

6. The air conditioner according to claim 1, wherein an opening (5) is formed in a position of the main body (2) separated from the dust collector mounting unit (24), and the cover unit (26) is arranged to open and close the opening (5) and the dust collector mounting unit (24) simultaneously.

7. The air conditioner according to claim 1, wherein a portion of the discharge portion (188) is located inside the dust collector mounting unit (24).

8. The air conditioner according to claim 1, wherein an opening portion (205) through which the discharge portion (188) passes is formed in a rear side of the dust collector mounting unit (24).

## Patentansprüche

1. Klimaanlage umfassend:
einen Hauptkörper (2), in welchem ein Luftansauganschluss (4) gebildet ist;
einen Filter (80), welcher in den Hauptkörper (2) angesaugte Luft reinigt;
eine Ansaugvorrichtung (100), welche Fremdkörper von dem Filter (80) saugt, umfassend einen Reinigungslüfter (180), welcher mit einem Reinigungsgebläsemotor (181), der konfiguriert ist, um eine Saugkraft zu erzeugen, und einem Abgabeabschnitt (188) bereitgestellt ist;
einen Staubsammler (190), zu dem zu der Ansaugvorrichtung (100) angesaugte Fremdkörper und Luft strömen, **dadurch gekennzeichnet, dass** der Staubsammler umfasst:
einen Staubsammelkörper (191), welche eine offene Seite aufweist;
eine Staubsammelabdeckung (192), welche mit dem Staubsammelkörper (191) gekoppelt ist, um die offene Seite des Staubsammelkörpers (191) zu blockieren;
ein Lufteinlassloch (193), welches in dem Staubsammelkörper (191) gebildet ist, welches konfiguriert ist, um Luft anzusaugen, welche Fremdkörper enthält; und
ein Luftabgabeloch (194), welches in dem Staubsammelkörper (191) gebildet ist, welches konfiguriert ist, um Luft von dem Staubsammler (190) abzugeben;
eine Staubsammler-Montageeinheit (24), welche in dem Hauptkörper (2) bereitgestellt ist, um den Staubsammler (190) ausgewählt zu montieren, wobei die Staubsammler-Montageeinheit (24) einen Aufnahmeabschnitt definiert, welcher konfiguriert ist, den Staubsammler (190) aufzunehmen; und
eine Abdeckeinheit (26), welche mit dem Hauptkörper (2) verbunden ist, um die Staubsammler-Montageeinheit (24) zu öffnen und zu schließen; und dadurch, dass
der Abgabeabschnitt (188) der Ansaugvorrichtung mit dem Staubsammler (190) gekoppelt ist, um die Fremdkörper abzugeben.

2. Klimaanlage nach Anspruch 1, wobei eine hintere Seite des Staubsammlers (190) eng an einer hinteren Seite der Staubsammler-Montageeinheit (24) angebracht ist.

3. Klimaanlage nach Anspruch 1, wobei eine vordere Seite des Staubsammlers (190), welche einer Außenseite ausgesetzt ist, wenn die Abdeckeinheit (26) geöffnet ist, aus einem transparenten Material gebildet ist.

4. Klimaanlage nach Anspruch 1, wobei eine Führung (25), welche einen Montagevorgang des Staubsammlers (190) führt, an der Staubsammler-Montageeinheit (24) gebildet ist.

5. Klimaanlage nach Anspruch 1, wobei eine Führung (25), welche den Staubsammler (190) stützt, an einer unteren Seite der Staubsammler-Montageeinheit (24) bereitgestellt ist, wobei die Führung (25) elastisch verformbar ist.

6. Klimaanlage nach Anspruch 1, wobei eine Öffnung (5) in einer Position des Hauptkörpers (2) gebildet ist, welche von der Staubsammler-Montageeinheit (24) getrennt ist, und die Abdeckeinheit (26) angeordnet ist, um die Öffnung (5) und die Staubsammler-Montageeinheit (24) gleichzeitig zu öffnen und zu schließen.

7. Klimaanlage nach Anspruch 1, wobei ein Abschnitt des Abgabeabschnitts (188) in der Staubsammler-Montageeinheit (24) gelegen ist.

8. Klimaanlage nach Anspruch 1, wobei ein Öffnungsabschnitt (205), durch welchen der Abgabeabschnitt (188) durchgeht, in einer hinteren Seite der Staubsammler-Montageeinheit (24) gebildet ist.

## Revendications

1. Climatiseur comprenant :
un corps principal (2) dans lequel un orifice d'aspiration d'air (4) est formé ;
un filtre (80) purifiant l'air aspiré vers le corps principal (2) ;
un dispositif d'aspiration (100) aspirant des substances étrangères du filtre (80) comportant une soufflante de nettoyage (180) munie d'un moteur (181) de ventilateur de nettoyage configuré pour générer une force d'aspiration et une partie d'évacuation (188) ;
un collecteur de poussière (190) vers lequel s'écoulent les substances étrangères et l'air aspirés vers le dispositif d'aspiration (100), **caractérisé en ce que** le collecteur de poussière comporte :
un corps collecteur de poussière (191) ayant un côté ouvert ;
un couvercle collecteur de poussière (192) couplé au corps collecteur de poussière (191) pour bloquer le côté ouvert du corps collecteur de poussière (191) ;
un trou d'admission d'air (193) formé dans le corps collecteur de poussière (191) configuré pour aspirer l'air contenant des substances étrangères ; et
un trou d'évacuation d'air (194) formé dans le corps collecteur de poussière (191) configuré pour évacuer l'air du collecteur de poussière (190) ;
une unité de montage (24) de collecteur de poussière prévue dans le corps principal (2) pour monter sélectivement le collecteur de poussière (190), l'unité de montage (24) de collecteur de poussière définissant une partie de réception configurée pour recevoir le collecteur de poussière (190) ; et
une unité de couvercle (26) reliée au corps principal (2) pour ouvrir et fermer l'unité de montage (24) de collecteur de poussière ; et **en ce que**
la partie d'évacuation (188) du dispositif d'aspiration est couplée au collecteur de poussière (190) pour évacuer les substances étrangères.

2. Climatiseur selon la revendication 1, dans lequel un côté arrière du collecteur de poussière (190) est étroitement fixé sur un côté arrière de l'unité de montage (24) de collecteur de poussière.

3. Climatiseur selon la revendication 1, dans lequel un côté frontal du collecteur de poussière (190), exposé à l'extérieur lorsque l'unité de couvercle (26) est ouverte, est réalisé en un matériau transparent.

4. Climatiseur selon la revendication 1, dans lequel un guide (25) guidant une opération de montage du collecteur de poussière (190) est formé sur l'unité de montage (24) de collecteur de poussière.

5. Climatiseur selon la revendication 1, dans lequel un guide (25) supportant le collecteur de poussière (190) est prévu sur un côté inférieur de l'unité de montage (24) de collecteur de poussière, le guide (25) étant transformable de manière élastique.

6. Climatiseur selon la revendication 1, dans lequel une ouverture (5) est formée dans une position du corps principal (2) séparée de l'unité de montage (24) de collecteur de poussière, et l'unité de couvercle (26) est agencée pour ouvrir et fermer l'ouverture (5) et l'unité de montage (24) de collecteur de poussière simultanément.

7. Climatiseur selon la revendication 1, dans lequel une partie de la partie d'évacuation (188) est située à l'intérieur de l'unité de montage (24) de collecteur de poussière.

8. Climatiseur selon la revendication 1, dans lequel une partie d'ouverture (205) à travers laquelle passe la partie d'évacuation (188) est formée dans un côté arrière de l'unité de montage (24) de collecteur de poussière.
